# Europäisches Patentamt

(19) **European Patent Office**

**Office européen des brevets**

(11) Publication number : **0 429 863 B1**

(12) **EUROPEAN PATENT SPECIFICATION**

(45) Date of publication of patent specification :
27.10.93 Bulletin 93/43

(51) Int. Cl.[5] : **C09K 11/07, C07C 15/60**

(21) Application number : **90120660.7**

(22) Date of filing : **29.10.90**

(54) **Chemiluminescent systems.**

(30) Priority : **30.11.89 US 443618**

(73) Proprietor : **AMERICAN CYANAMID COMPANY**
**1937 West Main Street P.O. Box 60**
**Stamford Connecticut 06904-0060 (US)**

(43) Date of publication of application :
05.06.91 Bulletin 91/23

(72) Inventor : **Essenfeld, Amy P.**
**2289 Bedford Street I-3**
**Stamford, Connecticut 06905 (US)**
Inventor : **Freeman JR., John J.**
**1 Lisa Lane**
**Valhalla, New York 10595 (US)**

(45) Publication of the grant of the patent :
27.10.93 Bulletin 93/43

(84) Designated Contracting States :
**AT BE CH DE DK ES FR GB GR IT LI LU NL SE**

(74) Representative : **Wächtershäuser, Günter, Dr.**
**Tal 29**
**D-80331 München (DE)**

(56) References cited :
EP-A- 0 231 923
US-A- 4 655 969
US-A- 4 751 616

Jouve, 18, rue Saint-Denis, 75001 PARIS

## Description

Two component chemiluminescent systems which utilize reaction mixtures of hydrogen peroxide, an oxalate ester and a fluorescer to produce light are well known. In such systems, solutions of hydrogen peroxide in dimethyl phthalate, or a mixture of dimethyl phthalate and t-butyl alcohol, and an oxalate ester such as bis(2,4,5-trichlorocarbopentoxyphenyl)oxalate, and a fluorescer, for example 9,10-diphenyl anthracene, in a solvent such as dibutyl phthalate, are mixed and allowed to react, whereupon light is produced.

Recently it has been shown that use of mono and di-alkyl substituted 9,10-bis (phenylethynyl) anthracene derivatives such as 2-ethyl-9,10-bis(phenylethynyl)anthracene (2-EBPEA) and 1,4-dimethyl-9,10-bis(phenylethynyl)anthracene (1,4-DMBPEA) as fluorescers achieved improved light output at lower temperatures and also achieved improvement as bright, short duration formulations at ambient temperature, see U.S. Patent US-A-4,655,969. Chemiluminescent systems are basically low light intensity systems and any improvement in light intensity in these system would be a step forward in the art.

## Summary of the Invention

The present invention relates to novel fluorescers for chemiluminescent mixtures that have higher chemiluminescence efficiencies and light output as measured by the light capacity than those disclosed in the prior art. This invention comprises tri- and tetra-methyl substituted 9,10-bis(phenylethynyl) anthracenes and their use to provide greater efficiency to oxalate ester chemiluminescent reactions. The use of the novel fluorescent dyes, 1,2,4-trimethyl-9,10-bis(phenylethynyl)anthracene (TriMBPEA) and 1,2,3,4-tetramethyl-9,10-bis(phenylethynyl)anthracene (TetraMBPEA), provides a significant improvement in light output at lower temperatures and also as bright, short duration formulations at ambient temperature.

## Detailed Description of the Invention

The present invention provides novel fluorescers for generating chemiluminescence. Reaction mixtures comprising (a) the fluorescer compound, and (b) a diluent, in proportions and concentrations to produce chemiluminescence when reacted with a peroxide component in the presence of a chemiluminescent reactant, and optionally a catalyst, also form the present invention.

The fluorescers of the present invention are particularly distinguished from the prior art fluorescers in chemiluminescent mixtures by the fact that they provide higher total integrated light output (TLOP) in Foot-Lamberts-Hour (Ft-L-Hr) over the duration of time that data was collected at temperatures ranging from-32°C to-3°C and at ambient temperature.

The composition for reaction with a peroxide component to generate chemiluminescence comprises a liquid which will solubilize the fluorescer compound and the chemiluminescent compound to provide initial concentrations in the reaction system of about 0.002M to about 0.2M of the reactant and about 0.0005M to about 0.05M of the fluorescer. The liquid diluent must be relatively unreactive toward the other ingredients of the chemiluminescent mixture.

The molar concentrations of the reactant and the fluorescer in the composition before addition and reaction with the peroxide component is 1.3 times the molar concentrations of the same materials in the reacting systems.

Typical diluents which can be used in the composition for reaction with a peroxide component include esters, and aromatic hydrocarbons. Dibutyl phthalate is preferred. Any diluent can be employed which provides initial concentrations of the oxalate in the reacting system of from about 0.002M to about 0.2M inclusive, and is nonreactive toward the oxalate.

The peroxide component may be any peroxide, hydroperoxide, or hydrogen peroxide compound. Typical hydroperoxides include t-butylhydroperoxide, peroxybenzoic acid, and hydrogen peroxide. Hydrogen peroxide is the preferred hydroperoxide and may be employed as a solution of hydrogen peroxide in a solvent or as an anhydrous hydrogen peroxide.

Diluents which can be employed include any fluid which is relatively unreactive toward the hydroperoxide, the oxalate and the fluorescer, and which accommodates a solubility to provide at least 0.01M hydroperoxide. Typical solvents for the hydroperoxide component include substituted alcohols, such as ethanol and tertiary butanol, and 3-methyl-3-pentanol, and esters, such as ethyl acetate and dimethyl phthalate, see U.S. Patent US-A- 4,751,616.

The preferred diluent for the peroxide component is a mixture of about 80 volume percent of dimethylphthalate and about 20 volume percent of tertiary butanol.

The hydrogen peroxide concentration in the peroxide component may range from about 0.5M to about 2M.

EP 0 429 863 B1

Preferably, the concentration is about 1.5M.

Catalysts which may be used include lithium salicylate, lithium 5-butyl salicylate, lithium 2-chlorobenzoate, and the like.

The following examples are set forth for purposes of illustration only and are not meant to be construed as limitations on the present invention. All parts and percentages are by weight unless otherwise specified.

EXAMPLE I

Synthesis of 1,2,4-trimethyl-9,10-bis(phenylethynyl)anthracene

To a suitable reaction vessel are charged 8.1 parts of 1,2,4-trimethylbenzene, 10 parts of phthalic anhydride and 132.5 parts of methylene chloride. The vessel is cooled to 0°C and charged portionwise with 19.85 parts of aluminum chloride. Stirring at room temperature is continued for 4-5 hours and the reaction media is then quenched with 50-100 parts of dilute HC1 solution (1-5% solution). Extraction twice with 150-200 parts of ethyl acetate is then effected and the ethyl acetate layer is concentrated in vacuo. 18 Parts of crude 2-(2,3,5-trimethylbenzoyl)benzoic acid are recovered. The acid may be used as is in the next step or it can be purified by precipitation from a mixture of ethyl acetate and hexane. The purified product melts at 145-148°C.

To a second reaction vessel are charged 8.9 parts of 2-(2,3,5-trimethylbenzoyl)benzoic acid and 15-30 parts of sulfuric acid. The reaction mixture is heated to 95°C for 4-6 hours and quenched by pouring it into 40-50 parts of water. The dark brown precipitate is filtered off and recrystallized from 100-200 parts of dimethylformamide or acetic acid using activated charcoal, and yielding 5.2 parts of 1,2,4-trimethylanthraquinone which melts of 160-162°C.

1.2 Parts of lithium amide, 5.5 parts of 1,2,4-trimethylanthraquinone and 30-40 parts of dioxane are charged to a third vessel. 5.0 Parts of phenylacetylene are added and the vessel is heated to 95°C for 5-6 hours. The media is cooled to room temperature and a suspension of 10.9 parts of stannous chloride dihydrate in 30-40 parts of dimethylformamide is charged and stirred overnight at room temperature. 70-80 Parts of acetic acid are then added. After standing for at least 5 minutes, the orange precipitate is filtered off. The solid is rinsed twice with 30-40 parts of methanol and dried under vacuum. The reaction yields 6.9 parts of 1,2,4-trimethyl-9,-10-bis(phenylethynyl)anthracene which melts at 165-168°C.

EXAMPLE II

Synthesis of 1,2,3,4-tetramethyl-9, 10-bis(phenylethynyl)anthracene

To a suitable reaction vessel are charged 10 parts of 1,2,3,4-tetramethylbenzene, 10 parts of phthalic anhydride, and 135 parts of methylene chloride and cooled to 0°C. 19.9 Parts of aluminum chloride are charged portionwise and stirred at room temperature for at least 4 hours. The resultant reaction media is worked up as described for 2-(2,3,5-trimethylbenzoyl)benzoic acid in Example I to yield 19 parts of crude 2-(2,3,4,5-tetramethylbenzoyl)benzoic acid.

8.9 Parts of the 2-(2,3,4,5-tetramethylbenzoyl)benzoic acid and 30-40 parts of sulfuric acid are charged to a second vessel and heated to 95°C for 4-6 hours and then poured into 40-50 parts of water. The resultant dark brown precipitate is isolated by filtration and recrystallized from acetic acid as described for trimethylanthraquinone in Example I, above. The reaction yields 3.5 parts of 1,2,3,4-tetramethylanthraquinone which melts at 236-238°C.

To another vessel are charged 0.63 part of lithium amide, 3.0 parts of 1,2,3,4-tetramethylanthraquinone, 18-20 parts of dioxane and 2.6 parts of phenylacetylene. The reaction mixture is heated to 95°C for 4-6 hours and then cooled to room temperature. A suspension of 5.6 parts of stannous chloride dihydrate in 18-20 parts of dimethylformamide is charged, the resultant media is stirred at room temperature overnight and 40-50 parts of acetic acid are then added. The precipitate is isolated by filtration and the solid product is washed twice with 18-20 parts of methanol and dried under vacuum. The reaction yields 3.0 parts of 1,2,3,4-tetramethyl-9,10-bis(phenylethynyl)anthracene which melts at 158-159°C.

Chemiluminescent or chemical light is triggered by the mixing of a peroxide with a fluorescer and a chemiluminescent reactant. In the following experiments, the fluorescer/chemiluminescent reactant composition is composed of 11.3% of bis(2,4,5-trichloro-6-carbopentoxyphenyl)oxalate (CPPO), a 0.29% of fluorescer and dibutyl phthalate. Three separate solutions are prepared using the following three fluorescers; 1,2,4-trimethyl-9,10-bis(phenylethynyl)anthracene, 1,2,3,4-tetramethyl-9,10-bis(phenylethynyl)anthracene and 1,4-dimethyl-9,10-bis(phenylethynyl)anthracene (DMBPEA) (See U.S. Patent US-A-4,655,969).

For the low temperature experiments of Table I, the peroxide composition is a solution of 4.68% hydrogen peroxide, 1.2% water, 13.3% t-butanol, 0.41% lithium salicylate, as the catalyst, and 80.41% dimethyl phthalate.

The fluorescer and peroxide compositions are reacted at -32°C, and -18°C and -10°C and the total light output (TLOP) is measured in Foot-Lambert-Hour (FT-L-Hr) for one hour.

The two solutions are mixed in a ratio of 7.8 parts (74%) of fluorescer to 2.8 parts (26%) of peroxide. The results are set forth in Table I, below.

## TABLE I

## Low Temperature

## Light Output Data on TriMBPEA and TetraMBPEA

| Fluorescer | Temperature | Duration* | TLOP** |
|---|---|---|---|
| TetraMBPEA | $-32^{\circ}$C | 1 hr | 18.9 |
| TriMBPEA | $-32^{\circ}$C | 1 hr | 17.9 |
| DMBPEA | $-32^{\circ}$C | 1 hr | 12.6 |
| TetraMBPEA | $-18^{\circ}$C | 1 hr | 32.9 |
| TriMBPEA | $-18^{\circ}$C | 1 hr | 30.6 |
| DMBPEA | $-18^{\circ}$C | 1 hr | 22.6 |
| TriMBPEA | $-10^{\circ}$C | 1 hr | 46.7 |
| DMBPEA | $-10^{\circ}$C | 1 hr | 34.7 |

\* Duration is the length of time light output is collected.

\*\* TLOP is the total integrated light output in Ft-L-Hr over the duration of data collection. (1 Ft-L-Hr = 12334.5 cd.s.m$^{-2}$)

As can be seen from Table I, the TriMBPEA and TetraMBPEA compounds are superior in performance to the DMBPEA found in the literature when utilized in low temperature formulations. At -32°C, TetraMBPEA has 50% and TriMBPEA has 42% more light output than DMBPEA, at -18°C TetraMBPEA has 46% and TriMBPEA has 35% more light output than DMBPEA and at -10°C TriMBPEA has 34% more light output than DMBPEA. An increase in light output of from 34% to 50% in one hour is a significant improvement.

For measurement of light output for short duration/high intensity formulations, the same fluorescer solutions are used as described above. The same peroxide composition is again used except that the concentration of lithium salicylate is doubled to a concentration of 0.82% and the concentration of dimethyl phthalate is decreased slightly to 80.0%. The two solutions are mixed in a ratio of 7.8 parts (74%) of fluorescer to 2.8 parts (26%) of peroxide.

The light output is measured at 23°C for 15 minutes and the results are shown in Table II, below.

4

## Table II
### Short Duration/High Temperature
### Light Output Data on TriMBPEA and DMBPEA

| Fluorescer | Temperature | Duration* | TLOP** |
|------------|-------------|-----------|--------|
| TriMBPEA | 23°C | 15 min | 98.6 |
| DMBPEA | 23°C | 15 min | 85.4 |

\*      Duration is the length of time light output is collected.

\*\*      TLOP is the total integrated light output in Ft-L-Hr over the duration of data collection.
(1 Ft-L-Hr = 12334.5 $cd.s.m^{-2}$ )

Table II shows that TriMBPEA is superior in performance to DMBPEA in short duration/high intensity formulations at room temperature. At 23°C and 15 minutes duration, TriMBPEA has a 15% higher light output than DMBPEA.

## Claims

**Claims for the following Contracting States : AT, BE, CH, DE, DK, FR, GB, GR, IT, LI, LU, NL, SE**

1. Method for producing light in low temperature systems and ultra high intensity-short duration systems wherein a hydrogen peroxide component, an oxalate ester component and a fluorescer component are mixed together and allowed to react to produce light, characterized by utilizing as said fluorescer 1,2,4-trimethyl-9,-10-bis(phenylethynyl)anthracene   or   1,2,3,4-tetramethyl-9,10-bis(phenylethynyl)anthracene.

2. A method for producing light according to Claim 1 where the fluorescer is 1,2,4-trimethyl-9,10-bis(phenylethynyl)anthracene.

3. A method for producing light according to Claim 1 where the fluorescer is 1,2,3,4-tetramethyl-9,10-bis(phenylethynyl)anthracene.

4. The compound 1,2,4-trimethyl-9,10-bis (phenylethynyl) anthracene.

5. The compound 1,2,3,4-tetramethyl-9,10-bis (phenylethynyl) anthracene.

**Claims for the following Contracting State : ES**

1. Method for producing light in low temperature systems and ultra high intensity-short duration systems wherein a hydrogen peroxide component, an oxalate ester component and a fluorescer component are mixed together and allowed to react to produce light, characterized by utilizing as said fluorescer 1,2,4-trimethyl-9,10-bis(phenylethynyl)anthracene or 1,2,3,4-tetramethyl-9,10-bis(phenylethynyl)anthracene.

2. A method for producing light according to Claim 1 where the fluorescer is 1,2,4-trimethyl-9,10-bis(phenylethynyl)anthracene.

3. A method for producing light according to Claim 1 where the fluorescer is 1,2,3,4-tetramethyl-9,10-bis(phenylethynyl)anthracene.

5

4. A process for preparing the compound 1,2,4-trimethyl-9,10-bis(phenylethynyl) anthracene, characterized by reacting 1,2,4-trimethylbenzene, phthalic anhydride and aluminum chloride in the presence of methylene chloride to obtain 2-(2,3,5-trimethylbenzoyl)benzoic acid,
reacting 2-(2,3,5-trimethylbenzoyl)benzoic acid and sulfuric acid with heating to 95°C for 4-6 hours to obtain 1,2,4-trimethylanthraquinone,
reacting 1,2,4-trimethylanthraquinone and lithium amide phenylacetylene in the presence of dioxane with heating to 95°C for 5-6 hours, cooling to room temperature and adding a suspension of stannous chloride dihydrate in dimethylformamide, stirring at room temperature overnight, adding acetic acid and separating the resulting orange precipitate.

5. A process for preparing the compound 1,2,3,4-tetramethyl-9,10-bis(phenylethynyl)anthracene, characterized by reacting 1,2,3,4-tetramethylbenzene, phthalic anhydride and aluminum chloride in the presence of methylene chloride to obtain 2-(2,3,4,5-tetramethylbenzoyl)benzoic acid,
reacting the 2-(2,3,4,5-tetramethylbenzoyl)benzoic acid and sulfuric acid with heating to 95°C for 4-6 hours to obtain 1,2,3,4-tetramethylanthraquinone,
reacting the 1,2,3,4-tetramethylanthraquinone, lithium amide and phenylacetylene in the presence of dioxan with heating to 95°C for 4-6 hours and than cooling to room temperature, adding a suspension of stannous chloride dihydrate in dimethylformamide, adding acetic acid and separating the resulting precipitate.

## Patentansprüche

### Patentansprüche für folgende Vertragsstaaten : AT, BE, CH, DE, DK, FR, GB, GR, IT, LI, LU, NL, SE

1. Verfahren zum Erzeugen von Licht in Systemen bei tiefer Temperatur und in Systemen sehr hoher Intensität und kurzer Dauer, worin eine Wasserstoffperoxid-Komponente, eine Oxalatester-Komponente und eine Fluoreszenzfarbstoff-Komponente miteinander vermischt werden und man sie sich unter Erzeugung von Licht umsetzen läßt, gekennzeichnet durch den Einsatz von 1,2,4-Trimethyl-9,10-bis(phenylethinyl)anthracen oder 1,2,3,4-Tetramethyl-9,10-bis(phenylethinyl)anthracen als Fluoreszenzfarbstoff.

2. Ein Verfahren zum Erzeugen von Licht nach Anspruch 1, worin der Fluoreszenzfarbstoff 1,2,4-Trimethyl-9,10-bis(phenylethinyl)anthracen ist.

3. Ein Verfahren zum Erzeugen von Licht nach Anspruch 1, worin der Fluoreszenzfarbstoff 1,2,3,4-Tetramethyl-9,10-bis(phenylethinyl)anthracen ist.

4. Die Verbindung 1,2,4-Trimethyl-9,10-bis(phenylethinyl)anthracen.

5. Die Verbindung 1,2,3,4-Tetramethyl-9,10-bis(phenylethinyl)anthracen.

### Patentansprüche für folgenden Vertragsstat : ES

1. Verfahren zum Erzeugen von Licht in Systemen bei tiefer Temperatur und in Systemen sehr hoher Intensität und kurzer Dauer, worin eine Wasserstoffperoxid-Komponente, eine Oxalatester-Komponente und eine Fluoreszenzfarbstoff-Komponente miteinander vermischt werden und man sie sich unter Erzeugung von Licht umsetzen läßt, gekennzeichnet durch den Einsatz von 1,2,4-Trimethyl-9,10-bis(phenylethinyl)anthracen oder 1,2,3,4-Tetramethyl-9,10-bis(phenylethinyl)anthracen als Fluoreszenzfarbstoff.

2. Ein Verfahren zum Erzeugen von Licht nach Anspruch 1, worin der Fluoreszenzfarbstoff 1,2,4-Trimethyl-9,10-bis(phenylethinyl)anthracen ist.

3. Ein Verfahren zum Erzeugen von Licht nach Anspruch 1, worin der Fluoreszenzfarbstoff 1,2,3,4-Tetramethyl-9,10-bis(phenylethinyl)anthracen ist.

4. Ein Verfahren zum Herstellen der Verbindung 1,2,4-Trimethyl-9,10-bis(phenylethinyl)anthracen, gekennzeichnet durch Umsetzen von 1,2,4-Trimethylbenzol, Phthalsäureanhydrid und Aluminiumchlorid in Gegenwart von Methylenchlorid, um 2-(2,3,5-Trimethylbenzoyl)benzoesäure zu erhalten,

Umsetzen von 2-(2,3,5-Trimethylbenzoyl)benzoesäure und Schwefelsäure unter Erhitzen für 4-6 Stunden auf 95°C, um 1,2,4-Trimethylanthrachinon zu erhalten,
Umsetzen von 1,2,4-Trimethylanthrachinon, Lithiumamid und Phenylacetylen in Gegenwart von Dioxan unter Erhitzen für 5-6 Stunden auf 95°C, Abkühlen auf Raumtemperatur und Zugeben einer Suspension von Zinn(II)chlorid-Dihydrat in Dimethylformamid, Rühren bei Raumtemperatur über Nacht, Hinzugeben von Essigsäure und Abtrennen des sich ergebenden orange-farbenen Niederschlages.

5. Ein Verfahren zum Herstellen der Verbindung 1,2,3,4-Tetramethyl-9,10-bis(phenylethinyl)anthracen, gekennzeichnet durch Umsetzen von 1,2,3,4-Tetramethylbenzol, Phthalsäureanhydrid und Aluminiumchlorid in Gegenwart von Methylenchlorid, um 2-(2,3,4,5-Tetramethylbenzoyl)benzoesäure zu erhalten,
Umsetzen von 2-(2,3,4,5-Tetramethylbenzoyl)benzoesäure und Schwefelsäure unter Erhitzen für 4-6 Stunden auf 95°C, um 1,2,3,4-Tetramethylanthrachinon zu erhalten,
Umsetzen von 1,2,3,4-Tetramethylanthrachinon, Lithiumamid und Phenylacetylen in Gegenwart von Dioxan unter Erhitzen für 4-6 Stunden auf 95°C, Abkühlen auf Raumtemperatur und Zugeben eines Suspension von Zinn(II)chlorid-Dihydrat in Dimethylformamid, Hinzugeben von Essigsäure und Abtrennen des sich ergebenden Niederschlages.

## Revendications

**Revendications pour les Etats contractants suivants : AT, BE, CH, DE, DK, FR, GB, GR, IT, LI, LU, NL, SE**

1. Procédé de production de lumière dans des systèmes à basse température et des systèmes ultra haute intensité-courte durée, dans lequel un composant peroxyde d'hydrogène, un composant d'ester d'oxalyle et un composant agent fluorescent sont mélangés ensemble et laissés à réagir pour produire de la lumière, ce procédé étant caractérisé par l'utilisation comme dit agent fluorescent du 1,2,4-triméthyl-9,10-bis(phényléthynyl)anthracène ou du 1,2,3,4-tétraméthyl-9,10-bis(phényléthynyl)anthracène.

2. Procédé de production de lumière selon la revendication 1 dans lequel l'agent fluorescent est le 1,2,4-triméthyl-9,10-bis(phényléthynyl)anthracène.

3. Procédé de production de lumière selon la revendication 1 dans lequel l'agent fluorescent est le 1,2,3,4-tétraméthyl-9,10-bis(phényléthynyl)anthracène.

4. Composé 1,2,4-triméthyl-9,10-bis(phényléthynyl)anthracène.

5. Composé 1,2,3,4-tétraméthyl-9,10-bis(phényléthynyl)anthracène.

**Revendications pour l'Etat contractant suivant : ES**

1. Procédé pour la production de lumière dans les systèmes à basse température et les systèmes ultra haute intensité - courte durée, dans lequel on mélange un composé peroxyde d'hydrogène, un ester d'acide oxalique et un agent fluorescent et on les laisse réagir pour produire de la lumière, caractérisé en ce que l'on utilise comme agent fluorescent le 1,2,4-triméthyl-9,10-bis(phényléthynyl)anthracène ou le 1,2,3,4-tétraméthyl-9,10-bis(phényléthynyl)anthracène.

2. Procédé pour la production de lumière selon la revendication 1, dans lequel l'agent fluorescent est le 1,2,4-triméthyl-9,10-bis(phényléthynyl)anthracène.

3. Procédé pour la production de lumière selon la revendication 1, dans lequel l'agent fluorescent est le 1,2,3,4-tétraméthyl-9,10-bis(phényléthynyl)anthracène.

4. Procédé pour la préparation du composé 1,2,4-triméthyl-9,10-bis(phényléthynyl)anthracene, caractérisé en ce que l'on fait réagir le 1,2,4-triméthylbenzène, l'anhydride phtalique et le chlorure d'aluminium en présence de chlorure de méthylène pour obtenir l'acide 2-(2,3,5-triméthylbenzoyl)benzoïque,
on fait réagir l'acide 2-(2,3,5-triméthylbenzoyl)benzoïque et l'acide sulfurique en chauffant à 95°C pendant 4 à 6 heures pour obtenir la 1,2,4-triméthylanthraquinone, on fait réagir la 1,2,4-triméthylanthraquinone, de l'amidure de lithium et du phénylacétylène en présence de dioxane en chaufant à 95°C pendant 5 à 6 heures, on refroidit à température ambiante et on ajoute une suspension de chlorure d'étain dihydraté dans le diméthylformamide, on agite une nuit à température ambiante, on ajoute de l'acide acétique et on sépare le précipité orange résultant.

5. Procédé pour la préparation du composé 1,2,3,4-tétraméthyl-9,10-bis(phényléthynyl)anthracène, caractérisé en ce que l'on fait réagir du 1,2,3,4-tétraméthylbenzène, de l'anhydride phtalique et du chlorure d'aluminium en présence de chlorure de méthylène pour obtenir l'acide 2-(2,3,4,5-tétraméthylbenzoyl)-benzoïque,
on fait réagir l'acide 2-(2,3,4,5-tétraméthylbenzoyl)benzoïque et l'acide sulfurique en chauffant à 95°C pendant 4 à 6 heures pour obtenir le 1,2,3,4-tétraméthylanthraquinone,
on fait réagir le 1,2,3,4-tétraméthylanthraquinone, l'amidure de lithium et le phénylacétylène en présence de dioxane en chauffant à 95°C pendant 4 à 6 heures et on refroidit ensuite à température ambiante, on ajoute une suspension de chlorure d'étain dihydraté dans le diméthylformamide, on ajoute de l'acide acétique et on sépare le précipité résultant.